# EUROPÄISCHE PATENTSCHRIFT

(11) **EP 0 741 279 B1**
(45) Veröffentlichungstag und Bekanntmachung des Hinweises auf die Patenterteilung: **01.07.1998**
(21) Anmeldenummer: 96105742.9
(22) Anmeldetag: 11.04.1996
(51) Int. Cl.: G01D 5/04, G01F 3/10

(54) **Volumenzähler**
Volume meter
Volumètre

(30) Priorität: 03.05.1995 DE 19516236
(43) Veröffentlichungstag der Anmeldung: 06.11.1996
(73) Patentinhaber: KEM KÜPPERS ELEKTROMECHANIK GMBH, D-85757 Karlsfeld (DE)
(72) Erfinder: Steuer, Thomas Klaus, Dipl.-Ing.(FH), 85221 Dachau (DE)
(74) Vertreter: Heim, Hans-Karl, Dipl.-Ing.

(56) Entgegenhaltungen:
- DE-A- 2 407 240
- US-A- 4 641 522
- US-A- 5 184 519

## Beschreibung

Die Erfindung betrifft einen Volumenzähler gemäß dem Oberbegriff des Anspruches 1.

Ein gattungsgemäßer Volumenzähler ist aus der US-A-4,641,522 bekannt. Bei diesem Volumenzähler wird ein Zahnradpaar durch eine Strömung in Rotation versetzt. Ein Sensor detektiert die Bewegung der Zähne und gibt beim Vorbeilauf eines Zahnes jeweils einen Signalimpuls ab. Die Anzahl der Impulse pro Zeiteinheit stellt ein Maß für die Strömung dar.

Ein anderer Volumenzähler ist aus der DE-U-94 20 572.8 bekannt. Bei diesem Zahnraddurchflußmesser ist ein Sensor im Umfangsbereich eines der Zahnräder angeordnet. Der Durchfluß, welcher durch die Zahnradanordnung strömt und diese antreibt, wird auf Grundlage der vom Sensor je vorbeilaufenden Zahn abgegebenen Impulse ermittelt.

Aus der DE-C-31 47 208 ist ein Volumenzähler mit einem Feldplattendifferentialfühler bekannt. Zur Übertragung des magnetischen Flusses des Fühlers sind zwei Polstifte in einer gespreizten Anordnung vorgesehen, um auch bei breiten Zähnen Signale zu ermöglichen.

Weiterhin geht ein Volumenzähler aus der DE-C-40 42 397 hervor. Zur Gewährleistung von Signalen bei hoher Meßfrequenz und hoher Betriebstemperatur ist der Sensor auf Platten in einer Bohrung gelagert, die mit Vergußmasse gefüllt ist. Schließlich ist der DE-A-24 07240 ein elektromagnetischer Impulsgeben zu entnehmen, bei dem ein Wechselfeld durch eine mit Zähnen versehene, rotierende Codierscheibe moduliert wird.

Der Erfindung liegt die **Aufgabe** zugrunde, einen gattungsgemäßen Volumenzähler in besonders wirtschaftlicher Weise so weiterzubilden, daß dieser möglichst viele Signalimpulse pro Zeiteinheit abgeben kann.

Ausgehend von einem gattungsgemäßen Volumenzähler wird die Aufgabe erfindungsgemäß durch die kennzeichnenden Merkmale des Anspruchs 1 gelöst. Ein Sensor Sensoreinrichtung ist im Bereich der Zahnradanordnung an einer Stelle angeordnet, an welcher der Sensor die Drehung beider Zahnräder detektiert.

Der einzelne Sensor ist in der Nähe der beiden Zahnräder so angeordnet, daß beide Zahnräder bereichsweise im Detektionsbereich des Sensors liegen. Dabei detektiert der Sensor abwechselnd die Zähne der beiden Zahnräder. Bei der Rotation und dem Ineinandergreifen der beiden Zahnräder wird also beispielsweise ein Zahn des einen Rades und anschließend ein Zahn des anderen Rades erkannt. Pro Erkennung eines Zahnes durch den Sensor wird ein Impuls abgegeben. Bei einer derartigen Positionierung des Sensors werden also doppelt soviele Signalimpulse im Vergleich zu einer Sensoreinrichtung mit einem nur ein Zahnrad erfassenden Sensor erzeugt. Diese Signalverdoppelung wird dabei ohne einen zusätzlichen Sensor und ohne eine spezielle Signalverknüpfungseinrichtung erreicht.

Eine vorteilhafte Ausführungsform der Erfindung besteht darin, daß der Sensor nahe am Umfangsbereich der Zahnräder angeordnet ist und daß der Sensor bei Detektion eines vorbeilaufenden Zahnes einen Signalimpuls abgibt. Der Sensor kann sowohl im Stirnbereich der Zahnräder oder in deren Flankenbereich angeordnet sein. Der Detektionsbereich des Sensors ist dabei so ausgebildet, daß sich nur jeweils ein Zahn der beiden Zahnräder zu einer bestimmten Zeit im Detektionssektor aufhält, so daß ein diskreter Signalimpuls erzeugt wird. Nachdem der eine Zahn den Detektionssektor verlassen hat, durchläuft anschließend ein Zahn des anderen Zahnrades den Detektionssektor des Sensors und erzeugt ein weiteres diskretes Signal.

Bei einer erfindungsgemäßen Weiterbildung ist es vorteilhaft, daß der Sensor in Achsrichtung der Zahnräder versetzt zu diesen neben der Eingriffszone der Zahnräder angeordnet ist. Als Eingriffszone der Zahnräder ist hier der Überschneidungsbereich der Kopfkreise der beiden Zahnräder zu verstehen. Durch die Versetzung in Achsrichtung besteht ausreichend Raum, den Sensor stirnseitig zu den Zahnrädern anzuordnen.

Hierbei ist der Sensor im Bereich eines der Schnittpunkte der Kopfkreise der Zahnräder angeordenet. Der Schnittpunkt der Kopfkreise ist die Stelle der Eingriffszone, bei der die Abstände zwischen zwei aufeinanderfolgenden Zähnen am größten ist. Diese Position ist daher besonders geeignet, um diskrete Signalimpulse zu erzeugen.

Eine weitere vorteilhafte Ausführungsform besteht darin, daß der Sensor zu den Achsen der Zahnräder einen gleichen Abstand aufweist. Durch diese symmetrische Anordnung des Sensors wird gewährleistet, daß die erzeugten Signalimpulse stets einen konstanten Abstand zueinander aufweisen.

Erfindungsgemäß ist der Sensor ein berührungslos arbeitender Sensor. Durch den Sensor wird somit eine zusätzliche mechanische Abnützung an den Zahnrädern vermieden. Der Sensor ist dabei ein elektronischer Sensor. Ein derartiger Sensor kann beispielsweise einen einzelnen, aus ferromagnetischem Material hergestellten Zahn detektieren.

Der Sensor ist ein Trägerfrequenz-Sensor. Derartige Sensoren stellen zuverlässige Standardsensoren dar, die eine kompakte Anordnung eines erfindungsgemäßen Volumenzählers ermöglichen.

Bei einer weiteren erfindungsgemäßen Ausführungsform ist es vorteilhaft, daß der Sensor an einer Stelle angeordnet ist, bei der die durch Detektion der Drehbewegung des einen Zahnrades erzeugten Signale eine bestimmte Phasenverschiebung zu den Signalen aufweisen, welche durch Detektion des anderen Zahnrades erzeugt sind. Die Phasenverschiebung kann dabei so gewählt sein, daß die einzelnen Signalimpulse gleiche oder unterschiedliche Impulsabstände zueinander aufweisen. Ungleichmäßige Signalabstände, die für bestimmte Regelungs- oder Steuerungsprozesse vorteilhaft sind, können beispielsweise durch eine unsymmetrische Anordnung des Sensors zu den Zahnradachsen erzeugt werden.

Hierbei stellt es eine vorteilhafte Weiterbildung der Erfindung dar, daß durch Änderung der Position und/oder Ausrichtung des Sensors eine gewünschte Phasenverschiebung einstellbar ist. Dies ist beispielsweise durch eine Justiereinrichtung möglich, durch welche die Lage und/oder die Ausrichtung des Sensors zu dem Zahnradpaar veränderbar ist. Somit kann je nach Anwendungsfall eine gewünschte Phasenverschiebung eingestellt werden.

Eine vorteilhafte und erfindungsgemäße Weiterentwicklung liegt darin, daß die Sensoreinrichtung mehrere Sensoren aufweist. Durch entsprechende Erhöhung der Sensorenanzahl kann eine beliebige Vervielfachung der Impulsanzahl erfolgen. So kann eine Verdreifachung dadurch erreicht werden, daß ein herkömmlich angeordneter Sensor mit einem "Doppel-Detektions"-Sensor verknüpft wird. Eine Vervierfachung kann mit lediglich zwei Sensoren dadurch erreicht werden, daß zwei Sensoren, welche jeweils die Rotation beider Zahnräder detektieren, an dem Zahnradpaar angeordnet sind.

Eine andere vorteilhafte Weiterbildung besteht darin, daß die Sensoreinrichtung eine Signalverarbeitungselektronik aufweist. Die Signalverarbeitungselektronik dient dabei zur Verknüpfung von Ausgangssignalen verschiedener Sensoren. Insbesondere kann diese Elektronik eine EXOR-(Exklusiv-Oder)-Verknüpfung von mehreren Signalen durchführen, um ein gemeinsames Ausgangssignal der Sensoreinrichtung zu erhalten.

Die Erfindung wird weiter anhand von Ausführungsbeispielen erläutert, welche schematisch in der Zeichnung dargestellt sind. Es zeigen
- Fig. 1a: in stark schematisierter Weise eine herkömmliche Anordnung mit einem Sensor;
- Fig. 1b und 1c: Signaldiagramme der Anordnung gemäß Fig. 1a;
- Fig. 2a: in stark schematisierter Weise eine andere herkömmliche Anordnung mit zwei Sensoren;
- Fig. 2b und 2c: Signaldiagramme der Anordnung gemäß Fig. 2a;
- Fig. 3a: in stark schematisierter Weise eine weitere Anordnung mit einem Sensor;
- Fig. 3b und 3c: Signaldiagramme der Anordnung gemäß Fig. 3a;
- Fig. 4: eine Querschnittsansicht durch ein erfindungsgemäßes Ausführungsbeispiel; und
- Fig. 5: eine Draufsicht auf den unteren Teil des Volumenzählers gemäß Fig. 4.

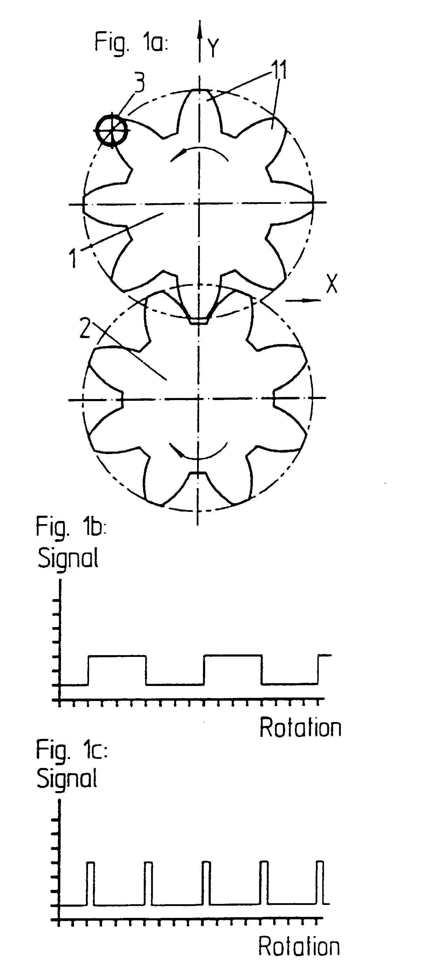

Aus Figur 1a geht die prinzipielle Anordnung eines Sensors 3 bei einer herkömmlichen Vorrichtung zur Erzeugung von Signalimpulsen hervor. Der Sensor 3 ist in der Nähe des Außenumfangs eines Zahnrades 1 angeordnet, welches mit einem Zahnrad 2 kämmt. Der Sensor 3 gibt beim Vorbeilaufen der Zähne 11 des Zahnrades 1 jeweils einen Signalimpuls ab.

Figur 1b ist ein Signaldiagramm, im dem der durch den Sensor 3 gemäß Figur 1a erzeugte Signalverlauf dargestellt ist. Aus dem Signaldiagramm geht hervor, daß beim Durchlauf eines Zahnes 11 durch den Detektionssektor des Sensors 3 jeweils ein Wechsel des Signalniveaus stattfindet.

Figur 1c ist ein weiteres Signaldiagramm, in welchem der Signalimpulsverlauf des Sensors 3 gemäß Fig. 1a dargestellt ist. Beim Vorbeilauf eines Zahnes 11 am Sensor 3 wird jeweils ein einzelner Signalimpuls erzeugt.

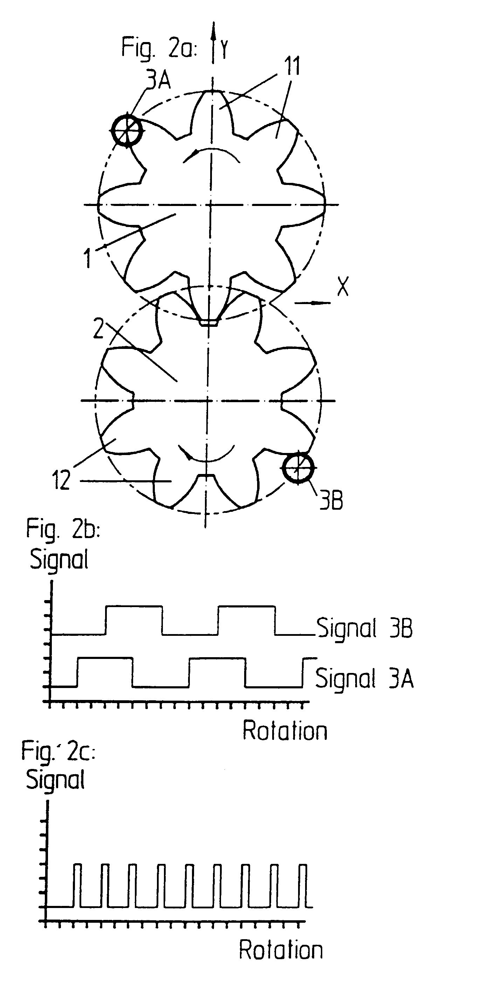

In Figur 2a ist die prinzipielle Anordnung einer herkömmlichen Signalerzeugungsvorrichtung gezeigt, mit der eine Impulsverdoppelung gegenüber der Vorrichtung aus Fig. 1a erreichbar ist. Die Vorrichtung weist zwei miteinander kämmende Zahnräder 1 und 2 auf. In unmittelbarer Nähe zum Umfangsbereich des Zahnrades 1 ist ein Sensor 3A angeordnet, welcher den Vorbeilauf der Zähne 11 des Zahnrades 1 detektiert. Ein zweiter Sensor 3B ist am Umfangsbereich des Zahnrades 2 angeordnet, um den Vorbeilauf der Zähne 12 des Zahnrades 2 zu detektieren.

In dem Signaldiagramm gemäß Fig. 2b sind die beiden Signalverläufe der Sensoren 3A und 3B getrennt dargestellt. Aus den beiden Signalverläufen geht hervor, daß die beiden Sensoren jeweils derart zu den Zahnrädern 1 und 2 angeordnet sind, daß die Signalverläufe um eine halbe Phase zueinander verschoben sind. Durch eine geeignete Elektronikverknüpfung kann aus diesen beiden Signalverläufen ein gemeinsames Ausgangsimpulssignal erzeugt werden, welches in Fig. 2c dargestellt ist. Bei einer geeigneten Signalverknüpfung weisen die Signalimpulse gleiche Abstände zueinander auf.

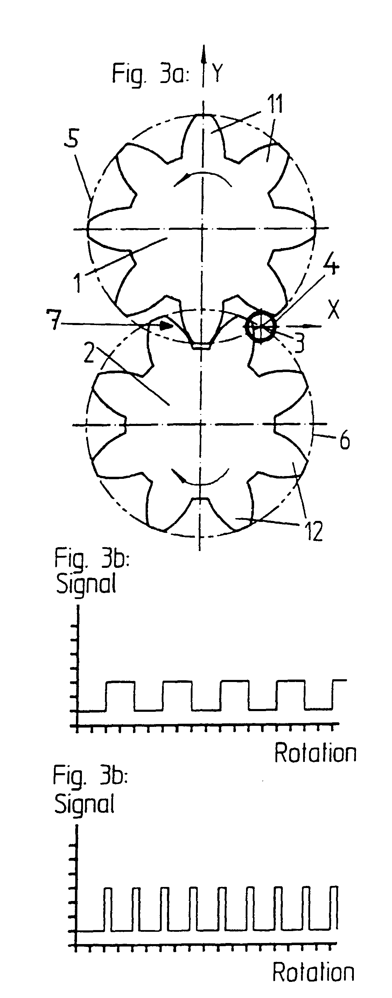

Eine Anordnung, die bei der Erfindung verwendet wird, ist schematisch in Fig. 3a gezeigt. Diese weist zwei miteinander kämmende Zahnräder 1 und 2 auf. Die Kopfkreise 5 und 6 der beiden Zahnräder 1 und 2 umschließen in ihrem Überschneidungsbereich die Eingriffszone 7. An dem rechtsseitigen Schnittpunkt 4 der beiden Kopfkreise 5 und 6 ist ein Sensor 3 angeordnet. Durch den Detektionsbereich des Sensors 3 laufen abwechselnd die Zähne 11 des Zahnrades 1 und die Zähne 12 des Zahnrades 2.

In Figur 3b ist der Signalverlauf gezeigt, der durch die Anordnung gemäß Fig. 3a erzeugt wird. Aus Figur 3b wird deutlich, daß bei vergleichbarer Zahnradanordnung und gleicher Drehzahl eine Verdoppelung der Signalfrequenz gegenüber den Vorrichtungen gemäß Fig. 1a und 2a erreicht wird.

Bei dem Signalimpulsverlauf gemäß Fig. 3c wird deutlich, daß die gleiche Anzahl von Signalimpulsen wie bei der Vorrichtung gemäß Figur 2a erreicht wird. Jedoch wird dieses Ergebnis mit nur einem Sensor und ohne eine aufwendige Signalverknüpfungselektronik erreicht.

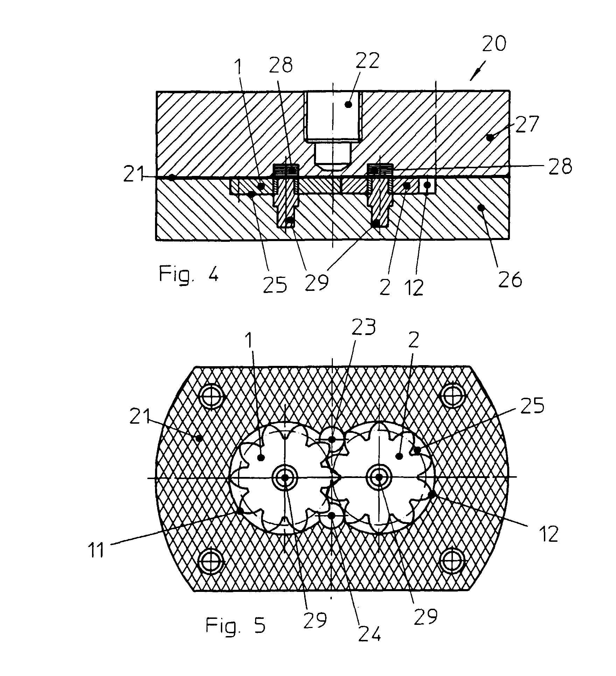

In Fig. 4 ist schematisch ein erfindungsgemäßen Volumenzähler 20 dargestellt. Die Fig. 4 zeigt einen Schnitt durch den Volumenzähler in der Ebene der Zahnradachsen 29. Der Volumenzähler 20 ist nach Art eines Zahnradmotors aufgebaut und weist zwei Gehäusehälften 26 und 27 auf. Beide Gehäusehälften 26 und 27, die auch als Deckel und Boden bezeichnet werden können, werden durch eine Dichtung 21 abgedichtet. Durch die Gehäusehälften 26, 27 wird eine Meßkammer 25 umschlossen, in denen die Zahnräder 1 und 2 vorgesehen sind. In der unteren Gehäusehälfte 26 sind die Achsen 29 befestigt, auf denen jeweils ein Zahnrad 1 und 2 drehbar gelagert ist. Das Anlaufen der Zahnräder 1 und 2 an der oberen Meßkammer wird durch Lagerplatten 28 verhindert, die in der oberen Gehäusehälfte 27 integriert sind.

In der oberen Gehäusehälfte 27 ist mit gleichem Abstand zu den Achsen 29 eine Sacklochbohrung 22 mit eingeschnittenem Gewinde vorgesehen, die als Sensoraufnahme dient. Durch die Sacklochbohrung 22, welche bis an den unmittelbaren Stirnbereich der Zahnräder 1 und 2 heranreicht, kann ein Sensor außerhalb der Meßkammer 25 zur berührungslosen Detektion der Zahnraddrehung im Stirnbereich der Zahnräder 1 und 2 angebracht werden. Die Sacklochbohrung 22 ist mittig zu den Achsen 29 oberhalb der Eingriffszone angeordnet, welche sowohl von den Zähnen 11 des Zahnrades 1 als auch von den Zähnen 12 des Zahnrades 2 durchlaufen wird. Somit kann der nicht dargestellte Sensor in der Sacklochbohrung 22 abwechselnd die vorbeilaufenden Zähne 11 und 12 der beiden Zahnräder 1 und 2 detektieren.

In Fig. 5 ist eine Draufsicht auf den unteren Gehäuseteil 26 mit der Flachdichtung 21 gezeigt. In der unteren Gehäusehälfte 26 sind die beiden Zahnräder 1 und 2 paßgenau in der Meßkammer 25 angeordnet. Zur Messung eines Durchflusses ist in der unteren Gehäusehälfte 26 ein Einlaßkanal 23 und ein Auslaßkanal 24 angeordnet. Die Strömung vom Einlaßkanal 23 zum Auslaßkanal 24 versetzt die beiden Zahnräder 1 und 2 in Rotation. Die am Sensor abwechselnd vorbeilaufenden Zähne 11 und 12 rufen eine entsprechende Anzahl von Signalimpulsen hervor. Diese Signalimpulse können in einer Auswerteelektronik zur Ermittlung des Durchflusses verarbeitet werden.

## Patentansprüche

1. Volumenzähler, welcher eine Zahnradanordnung mit wenigstens zwei miteinander kämmenden Zahnrädern (1, 2) und eine Sensoreinrichtung mit einem Sensor (3) aufweist, der im Bereich der Zahnradanordnung an einer Stelle angeordnet ist, an welcher sowohl die Zähne des einen Zahnrades (1) als auch die Zähne des anderen Zahnrades (2) den Detektionsbereich des Sensors (3) durchlaufen, wobei durch die Sensoreinrichtung jeweils ein Signal bei Durchlauf der einzelnen Zähne beider Zahnräder (1, 2) erzeugbar ist,
dadurch **gekennzeichnet,**
daß die Zahnräder (1, 2) aus einem ferromagnetischen Material sind,
daß der Sensor (3) als ein Trägerfrequenz-Sensor ausgebildet ist, und
daß der Sensor (3) im Bereich eines der Schnittpunkte (4) der Kopfkreise (5, 6) der Zahnräder (1, 2) angeordnet ist.

2. Volumenzähler nach Anspruch 1,
dadurch **gekennzeichnet,**
daß der Sensor (3) nahe am Umfangsbereich der Zahnräder (1, 2) angeordnet ist, und
daß der Sensor (3) bei Detektion eines vorbeilaufenden Zahnes (11, 12) einen Signalimpuls abgibt.

3. Volumenzähler nach Anspruch 1 oder 2,
dadurch **gekennzeichnet,**
daß der Sensor (3) in Achsrichtung der Zahnräder (1, 2) versetzt zu diesen neben der Eingriffszone (7) der Zahnräder (1, 2) angeordnet ist.

4. Volumenzähler nach einem der Ansprüche 1 bis 3,
dadurch **gekennzeichnet,**
daß der Sensor (3) zu den Achsen (29) der Zahnräder (1, 2) einen gleichen Abstand aufweist.

5. Volumenzähler nach einem der Ansprüche 1 bis 4,
dadurch **gekennzeichnet,**
daß die Lage und/oder die Ausrichtung des Sensors (3) zu den Zahnrädern (1, 2) veränderbar ist.

6. Volumenzähler nach einem der Ansprüche 1 bis 5,
dadurch **gekennzeichnet,**
daß der Sensor (3) an einer Stelle angeordnet ist, bei der die durch Detektion der Drehbewegung des einen Zahnrades (1) erzeugten Signale eine bestimmte Phasenverschiebung zu den Signalen aufweisen, welche durch Detektion des anderen Zahnrades (2) erzeugt sind.

7. Volumenzähler nach Anspruch 6,
dadurch **gekennzeichnet,**
daß durch Änderung der Position und/oder Ausrichtung des Sensors (3) eine gewünschte Phasenverschiebung einstellbar ist.

8. Volumenzähler nach einem der Ansprüche 1 bis 7,
dadurch **gekennzeichnet,**
daß die Sensoreinrichtung mehrere Sensoren aufweist.

9. Volumenzähler nach einem der Ansprüche 1 bis 8,
dadurch **gekennzeichnet,**
daß die Sensoreinrichtung eine Signalverarbeitungselektronik aufweist.

## Claims

1. Volume meter comprising a gear arrangement having at least two meshing gears (1, 2) and a sensing means having a sensor (3), which is located in the vicinity of said gear arrangement at a point at which both the teeth of one gear (1) and the teeth of the other gear (2) pass through the detection area of said sensor (3), said sensing means emitting in each case a signal on passing through of the individual teeth of said two gears (1, 2),
**characterized** in,
that said gears (1, 2) are made of a ferromagnetic material,
that said sensor (3) is constructed as a carrier frequency sensor, and
that said sensor (3) is located in the vicinity of one of the intersections (4) of the addendum circles (5, 6) of said gears (1, 2).

2. Volume meter according to claim 1,
**characterized** in,
that said sensor (3) is positioned close to the circumferential area of said gears (1, 2), and
that said sensor (3) is emitting a signal pulse on detecting a tooth (11, 12) moving past.

3. Volume meter according to claim 1 or 2,
**characterized** in,
that said sensor (3) is positioned in the axial direction of said gears (1, 2) in displaced manner thereto alongside the engagement zone (7) of said gears (1, 2).

4. Volume meter according to one of the claims 1 to 3,
**characterized** in,
that said sensor (3) is positioned equidistantly with respect to the axes (29) of said gears (1, 2).

5. Volume meter according to one of the claims 1 to 4,
**characterized** in,
that the position and/or the orientation of said sensor (3) in respect to said gears (1, 2) can be modified.

6. Volume meter according to one of the claims 1 to 5,
**characterized** in,
that said sensor (3) is located at a point at which the signals generated by the detection of the rotation of one gear (1) have a specific phase shift with respect to the signals generated by the detection of the other gear (2).

7. Volume meter according to claim 6,
**characterized** in,
that a desired phase shift can be set by modifying the position and/or the orientation of said sensor (3).

8. Volume meter according to one of the claims 1 to 7,
**characterized** in,
that said sensing means comprises several sensors.

9. Volume meter according to one of the claims 1 to 8,
**characterized** in,
that said sensing means comprises a signal processing electronic means.

## Revendications

1. Compteur volumétrique comportant une disposition de roues dentées avec au moins deux roues dentées (1, 2) qui engrènent l'une avec l'autre et une installation de capteur comprenant un capteur (3) placé dans la zone du dispositif d'engrenage à un endroit où les dents d'une roue dentée (1) ainsi que celles de l'autre roue dentée (2) passent dans la plage de détection du capteur (3), l'installation de capteur générant chaque fois un signal au passage des différentes dents des deux roues dentées (1, 2),
caractérisé en ce que
• les roues dentées (1, 2) sont en une matière ferromagnétique,
• le capteur (3) est un capteur à fréquence porteuse et
• le capteur (3) est prévu dans la zone de l'un des points d'intersection (4) du cercle de tête (5, 6) des roues dentées (1, 2).

2. Compteur volumétrique selon la revendication 1,
caractérisé en ce que
• le capteur (3) est prévu à proximité de la zone périphérique des roues dentées (1, 2) et
• le capteur (3) émet un signal impulsionnel à la détection du passage d'une dent (11, 12).

3. Compteur volumétrique selon la revendication 1 ou 2,
caractérisé en ce que
le capteur (3) est monté décalé dans la direction axiale des roues dentées (1, 2), par rapport à ces roues, à côté de la zone d'engrènement (7) des roues dentées (1, 2).

4. Compteur volumétrique selon l'une des revendications 1 à3,
caractérisé en ce que
le capteur (3) présente une distance égale par rapport aux axes (29) des roues dentées (1, 2).

5. Compteur volumétrique selon l'une des revendications 1 à4,
caractérisé en ce que
la position et/ou l'alignement du capteur (3) par rapport aux roues dentées (1, 2) est variable.

6. Compteur volumétrique selon l'une des revendications 1 à5,
caractérisé en ce que
le capteur (3) est prévu à un emplacement tel que les signaux, générés par la détection du mouvement de rotation de l'une des roues dentées (1), présentent un certain déphasage par rapport aux signaux générés par la détection de l'autre roue dentée (2).

7. Compteur volumétrique selon la revendication 6,
caractérisé en ce qu'
on règle un déphasage souhaité en modifiant la position et/ou l'alignement du capteur (3).

8. Compteur volumétrique selon l'une des revendications 1 à7,
caractérisé en ce que
l'installation de capteur comprend plusieurs capteurs.

9. Compteur volumétrique selon l'une des revendications 1 à8,
caractérisé en ce que
l'installation de capteurs comporte une électronique de traitement de signal.
